# EUROPEAN PATENT APPLICATION

(11) **EP 3 308 930 A1**
(43) Date of publication of application: **18.04.2018**
(21) Application number: 15905866.8
(22) Date of filing: 09.10.2015
(51) Int. Cl.: B29C 43/36, B29C 43/52

(54) **FIBER-REINFORCED COMPOSITE MEMBER FORMING DEVICE**

(71) Applicant: IHI Corporation, Tokyo 135-8710 (JP)
(72) Inventor: MURAKAMI, Tsutomu, Tokyo 135-8710 (JP); KOBIKI, Akira, Tokyo 135-8710 (JP); ISHIZAKI, Masato, Tokyo 135-8710 (JP)
(74) Representative: MERH-IP Matias Erny Reichl Hoffmann Patentanwälte PartG mbB
(86) International application number: PCT/JP2015/078811
(87) International publication number: WO 2017/061047

(57) **Abstract**

A fiber reinforced composite member molding apparatus comprises a pair of mold parts 2, 3 which are brought nearer to and away from each other, and in a mold clamping state, clamp laminated sheets of prepreg formed of woven fiber fabric impregnated with resin, and heat sources 4 for heating the resin in the prepreg through the pair of mold parts 2, 3, wherein the two mold parts 2, 3 each comprise a base mold 21, 33 and a design mold 25, 35 which is detachably attached to the base mold 21, 33 and brought into contact with the prepreg, wherein the design molds 25, 35 of the mold parts 2, 3 are made of a metal lower in thermal expansion rate than the base molds 25, 35. The mold parts having such split structure can reduce the burden on operators handling replacement of the mold parts, and also can suppress, during heating for molding, the influence of thermal expansion of the mold parts upon a to-be-molded fiber reinforced composite member.

## Description

### Technical Field

The present disclosure relates to a fiber reinforced composite member molding apparatus used to mold a fiber reinforced composite member from laminated sheets of prepreg formed of woven fiber fabric impregnated with thermosetting or thermoplastic resin as a matrix.

### Background Art

In molding a thermoplastic CFRP member (fiber reinforced composite member) from laminated sheets of prepreg formed of woven fiber fabric, such as woven carbon-fiber fabric, impregnated with thermoplastic resin as a matrix, a molding method using an autoclave is already established. Recently, as an alternative to the molding method using an autoclave, a mold hot press molding method using a molding apparatus is being developed.

An example of the molding apparatus for use in the mold hot press molding method is disclosed in Patent Document 1. This molding apparatus comprises a pair of mold parts which are brought nearer to or away from each other. Of the two mold parts, an upper one has a core projecting downward, and the other, lower one has a cavity open upward.

In molding with this molding apparatus, in a mold open mold state, laminated sheets of prepreg are set in the cavity in the lower mold part. Then, the upper mold part is moved down so that the prepreg is clamped between the core of the upper mold part and the cavity in the lower mold part. In this state, heating is conducted while pressure is applied to the prepreg with the thermoplastic resin melted, by the pair of mold parts.

After the application of pressure, the thermoplastic resin is cured by being cooled through the pair of mold parts. Consequently, a thermoplastic CFRP member of desired shape is obtained.

In this type of molding apparatus, each mold part is typically a single body made of tool steel. If the frequency of replacement of mold parts is low, the mold part in the form of a single body made of tool steel does not impose a significant burden on operators. However, in molding a large number of variations of a thermoplastic CFRP member, increased frequency of replacement of heavy mold parts leads to increased burden on operators.

To solve this problem, there has been devised a split mold part consisting of a standard component (base mold) which does not need replacing and a varying component (design mold) which is to be replaced according to the shape of a to-be-molded product, as disclosed in Patent Document 2, for example.

### Related Art Document

### Patent Document

Patent Document 1: Japanese Unexamined Patent Application Publication No. 2002-086483
Patent Document 2: Japanese Unexamined Patent Application Publication No. 2013-226785

### Summary of the Invention

### Problems to be solved by the Invention

In the above-mentioned conventional molding apparatus, if a split mold part consisting of a standard component and a varying component is adopted, the burden on operators handling replacement of mold parts can be reduced. However, there is a problem that thermal expansion which the mold part experiences during heating for molding significantly influences the accuracy of dimension, etc. of a to-be-molded thermoplastic CFRP member. Solutions to this problem have been being sought.

This disclosure is presented in view of the above problem with the conventional technology. An object of the disclosure is to provide a fiber reinforced composite member molding apparatus which comprises mold parts of split structure that can reduce the burden on operators handling the replacement of the mold parts, and which can suppress the influence of thermal expansion of the mold parts during heating for molding upon a to-be-molded fiber reinforced composite member.

### Means for Solving the Problems

A first aspect of the present invention comprises a pair of mold parts which are brought nearer to and away from each other, and in a mold clamping state, clamp laminated sheets of prepreg formed of woven fiber fabric impregnated with resin (thermosetting or thermoplastic resin), and a heating system for heating the resin in the prepreg through the pair of mold parts, wherein the two mold parts each comprise a base mold and a design mold which is detachably attached to the base mold and brought into contact with the prepreg, wherein the design molds of the mold parts are made of a metal lower in thermal expansion rate than the base molds.

### Advantageous Effects of the Invention

In the fiber reinforced composite member molding apparatus according to the first aspect of the present invention, the two mold parts each have a split structure, which can reduce the burden on operators handling the replacement of the mold parts.

In addition, the design molds of the mold parts are made of a metal lower in thermal expansion rate than the base molds. This provides a greatly advantageous effect that the influence of thermal expansion of the mold parts upon a to-be-molded fiber reinforced composite member can be suppressed during heating for molding.

### Brief Description of the Drawings

FIG. 1 is an explanatory cross-sectional view showing a fiber reinforced composite member molding apparatus according to an embodiment of the present invention in a mold open state.
FIG. 2 is an explanatory cross-sectional view at line A-A of FIG. 1 for showing a positioning mechanism in the fiber reinforced composite member molding apparatus of FIG. 1.
FIG. 3 is an explanatory cross-sectional view at line B-B of FIG. 1 for showing a positioning mechanism in the fiber reinforced composite member molding apparatus of FIG. 1.

### Mode for carrying out the Invention

With reference to the accompanying drawings, an embodiment of a fiber reinforced composite member molding apparatus according to the present invention will be described below.

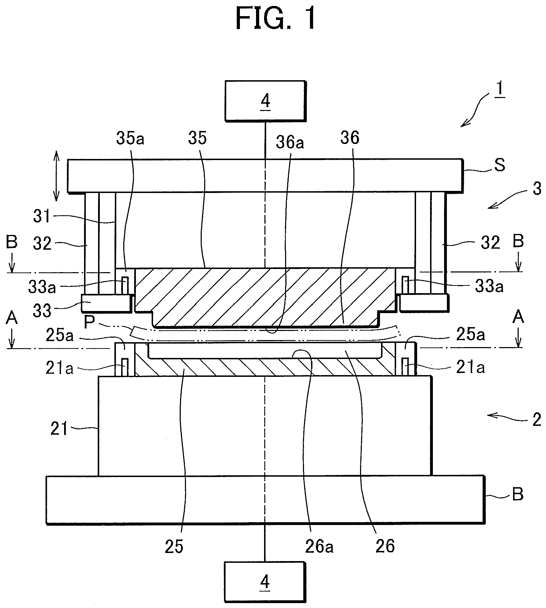

FIGS. 1 to 3 show an embodiment of the fiber reinforced composite member molding apparatus according to the present invention.

As shown in FIG. 1, a molding apparatus 1 is an apparatus to mold a fiber reinforced composite member (thermoplastic CFRP member, for example) from laminated sheets of prepreg formed of woven fiber fabric impregnated with thermosetting or thermoplastic resin, and comprises a pair of mold parts 2, 3. Here, the sheets of prepreg formed of woven fiber fabric impregnated with thermosetting or thermoplastic resin are laminated such that sheets of differing fiber orientation form alternate layers. From these laminated sheets of prepreg, a fiber reinforced composite member of plate-like shape is molded.

Of the two mold parts 2, 3, the lower mold part 2 comprises a base mold 21 fixed on a bolster B and a design mold 25 detachably attached to the base mold 21. The design mold 25 has a cavity 26.

In the lower mold part 2, the design mold 25 is made of a metal lower in thermal expansion rate than the base mold 21. The base mold 21 is made of, for example tool steel, while the design mold 25 is made of an alloy with a low thermal expansion rate, such as inver.

Of the two mold parts 2, 3, the upper mold part 3 comprises a base mold 31 fixed on a slide S which moves up and down, a suspended base mold 33 fixed to the slide S by columnar supports 32, and a design mold 35 detachably attached to the suspended base mold 33 to be held between the base mold 31 and the suspended base mold 33. The design mold 35 has a core 36 which, in a mold clamping state, engages with the cavity 26 in the design mold 25 of the lower mold part 2 so that the laminated sheets of prepreg, referred to as layered prepreg P (material to be molded into a fiber reinforced composite member), are clamped between the core 36 and the cavity 26 in the design mold 25.

Also in the upper mold part 3, the design mold 35 is made of a metal lower in thermal expansion rate than the suspended base mold 33. The suspended base mold 33 is made of, for example tool steel, while the design mold 2535 is made of an alloy with a low thermal expansion rate, such as inver.

The molding apparatus 1 has heat sources (heating system) 4, 4 to apply heat to the design molds 25, 35 of the lower and upper mold parts 2, 3, each from the side opposite the design surface 26a, 36a. In this molding apparatus 1, by heating the thermosetting or thermoplastic resin in the layered prepreg P between the lower mold part 2 and the upper mold part 3 by the heat sources 4, 4 and applying pressure, the layered prepreg P is molded into a fiber reinforced composite member.

In the present embodiment, for the base mold 21 and the design mold 25 of the lower mold part 2, a positioning mechanism is provided to place the base mold 21 and the design mold 25 in position with respect to each other. The positioning mechanism is adapted to absorb a difference between the amounts of thermal expansion which the base mold 21 and the design mold 25 experience when heated by the heat sources 4, 4.

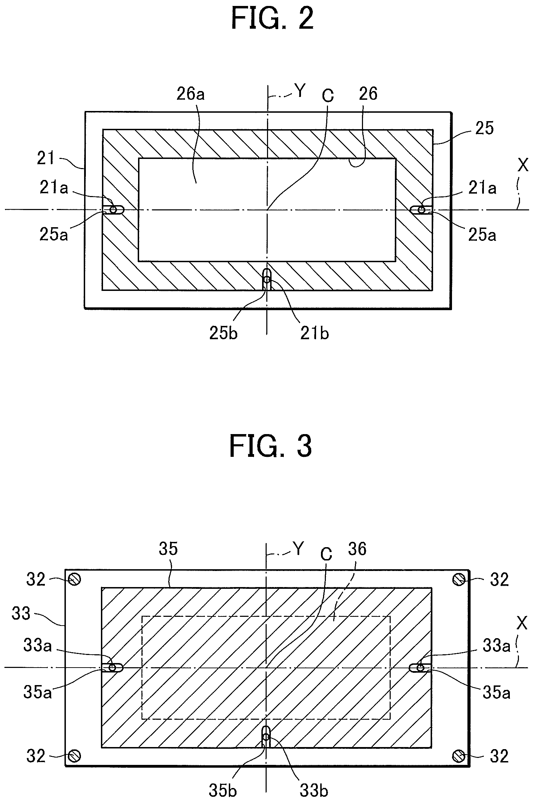

As shown also in FIG. 2, the positioning mechanism comprises two second-direction movement restriction pins 21a, 21a and a first-direction movement restriction pin 21b provided to the base mold 21 of the lower mold part 2.

The two second-direction movement restriction pins 21a, 21a are arranged on a first center line X, which is one of two center lines X, Y crossing at right angles at the center C of the base mold 21, and on the opposite sides of the center C, and thus, near the left and right side faces of the depicted base mold 21. The first-direction movement restriction pin 21b is arranged on a second center line Y, which is other of the two center lines X, Y, and in the present embodiment, near the front face of the base mold 21 (near the bottom edge in FIG. 2).

The positioning mechanism further comprises two second-direction movement restriction grooves 25a, 25a and a first-direction movement restriction groove 25b formed in the design mold 25 of the lower mold part 2.

The two second-direction movement restriction grooves 25a, 25a are arranged on a first center line X, which is one of two center lines X, Y crossing at right angles at the center C of the design mold 25, and extend along the first center line X on the opposite sides of the center C. These two second-direction movement restriction grooves 25a, 25a are adapted to engage with the two second-direction movement restriction pins 21a, 21a of the base mold 21, thereby restricting movement of the design mold 25 relative to the base mold 21 in the direction of a second center line Y while absorbing a difference between the amounts of thermal expansion in the direction of the first center line X which the base mold 21 and the design mold 25 experience when heated by the heat sources 4, 4.

The first-direction movement restriction groove 25b is arranged on a second center line Y, which is other of the two center lines X, Y, and extends along the second center line Y. This first-direction movement restriction groove 25b is adapted to engage with the first-direction movement restriction pin 21b of the base mold 21, thereby restricting movement of the design mold 25 relative to the base mold 21 in the direction of the first center line X while absorbing a difference between the amounts of thermal expansion in the direction of the second center line Y which the base mold 21 and the design mold 25 experience when heated by the heat sources 4, 4.

Incidentally, FIG. 2 shows the base mold 21 and the design mold 25 which are in position with respect to each other. In this state, the center C and two center lines X, Y of the base mold 21 are in agreement with those of the design mold 25.

To sum up, the positioning mechanism is arranged such that by engaging the two second-direction movement restriction grooves 25a, 25a of the design mold 25 with the two second-direction movement restriction pins 21a, 21a of the base mold 21 and engaging the first-direction movement restriction groove 25b of the design mold 25 with the first-direction movement restriction pin 21b of the base mold 21, the base mold 21 and the design mold 25 are placed in position with respect to each other, with their centers C, C in agreement.

The positioning mechanism maintains the two molds 21, 25 in position by absorbing a difference in the amounts of thermal expansion in the direction of the first center line X and in the direction of the second center line Y which the base mold 21 and the design mold 25 experience when heated by the heat sources 4, 4.

Also for the suspended base mold 33 and the design mold 35 of the upper mold part 3, the molding apparatus 1 comprises a positioning mechanism to place the two molds 33, 35 in position with respect to each other. Also this positioning mechanism is adapted to absorb a difference between the amounts of thermal expansion which the two molds 33, 35 experience when heated by the heat sources 4, 4.

As shown also in FIG. 3, the positioning mechanism comprises two second-direction movement restriction pins 33a, 33a and a first-direction movement restriction pin 33b provided to the suspended base mold 33 of the upper mold part 3.

The two second-direction movement restriction pins 33a, 33a are arranged on a first center line X, which is one of two center lines X, Y crossing at right angles at the center C of the suspended base mold 33, and on the opposite sides of the center C, and thus, near the left and right side faces of the depicted suspended base mold 33. The first-direction movement restriction pin 33b is arranged on a second center line Y, which is other of the two center lines X, Y, and in the present embodiment, near the front face of the suspended base mold 33 (near the bottom edge in FIG. 3).

The positioning mechanism further comprises two second-direction movement restriction grooves 35a, 35a and a first-direction movement restriction groove 35b formed in the design mold 35 of the upper mold part 3.

The two second-direction movement restriction grooves 35a, 35a are arranged on a first center line X, which is one of two center lines X, Y crossing at right angles at the center C of the design mold 35, and extend along the first center line X on the opposite sides of the center C. These two second-direction movement restriction grooves 35a, 35a are adapted to engage with the two second-direction movement restriction pins 33a, 33a of the suspended base mold 33, thereby restricting movement of the design mold 35 relative to the suspended base mold 33 in the direction of a second center line Y while absorbing a difference between the amounts of thermal expansion in the direction of the first center line X which the suspended base mold 33 and the design mold 35 experience when heated by the heat sources 4, 4.

The first-direction movement restriction groove 35b is arranged on a second center line Y, which is other of the two center lines X, Y, and extends along the second center line Y. This first-direction movement restriction groove 35b is adapted to engage with the first-direction movement restriction pin 33b of the suspended base mold 33, thereby restricting movement of the design mold 35 relative to the suspended base mold 33 in the direction of the first center line X while absorbing a difference between the amounts of thermal expansion in the direction of the second center line Y which the suspended base mold 33 and the design mold 35 experience when heated by the heat sources 4, 4.

Incidentally, also FIG. 3 shows the suspended mold 33 and the design mold 35 which are in position with respect to each other. In this state, the center C and two center lines X, Y of the suspended base mold 33 are in agreement with those of the design mold 35.

To sum up, also this positioning mechanism is arranged such that by engaging the two second-direction movement restriction grooves 35a, 35a of the design mold 35 with the two second-direction movement restriction pins 33a, 33a of the suspended base mold 33 and engaging the first-direction movement restriction groove 35b of the design mold 35 with the first-direction movement restriction pin 33b of the suspended base mold 33, the suspended base mold 33 and the design mold 35 are placed in position with respect to each other, with their centers C, C in agreement.

Also this positioning mechanism maintains the two molds 33, 35 in position by absorbing a difference in the amounts of thermal expansion in the direction of the first center line X and in the direction of the second center line Y which the suspended base mold 33 and the design mold 35 experience when heated by the heat sources 4, 4.

Next, a procedure of how to mold a fiber reinforced composite member with the molding apparatus 1 will be described. First, the design mold 25 is attached to the base mold 21 of the lower mold part 2.

Here, by engaging the two second-direction movement restriction grooves 25a, 25a of the design mold 25 with the two second-direction movement restriction pins 21a, 21a of the base mold 21 and engaging the first-direction movement restriction groove 25b of the design mold 25 with the first-direction movement restriction pin 21b of the base mold 21, the base mold 21 and the design mold 25 are placed in position with respect to each other, with their centers C, C in agreement. The grooves and the pins thus constitute a positioning mechanism.

Next, the design mold 35 is attached to the suspended base mold 33 of the upper mold part 3.

Also here, by engaging the two second-direction movement restriction grooves 35a, 35a of the design mold 35 with the two second-direction movement restriction pins 33a, 33a of the suspended base mold 33 and engaging the first-direction movement restriction groove 35b of the design mold 35 with the first-direction movement restriction pin 33b of the suspended base mold 33, the suspended base mold 33 and the design mold 35 are placed in position with respect to each other, with their centers C, C in agreement. The grooves and the pins thus constitute a positioning mechanism.

As described above, in the molding apparatus 1, the mold parts 2, 3 each have a split structure, and when replacement of the mold parts is required, the replacement can be accomplished by replacing only the design molds 25, 35. This reduces a burden on operators handling the replacement.

After preparing the mold parts 2, 3, in a mold open state, layered prepreg P, or laminated sheets of prepreg are set in the cavity 26 in the design mold 25 of the lower mold part 2.

Then, the upper mold part 3 is moved down with the slide S, thereby bringing the two mold parts into a mold clamping state. Consequently, the layered prepreg P is clamped between the core 36 of the design mold 35 of the upper mold part 3 and the cavity 26 in the design mold 25 of the lower mold part 2. In this state, heat is applied to the layered prepreg P by the heat sources 4, 4 through the design molds 25, 35, and pressure is applied to the layered prepreg P with the thermosetting or thermoplastic resin melted, by the upper mold part 3 and the lower mold part 2.

During this process, the positioning mechanism provided for the base mold 21 and the design mold 25 of the lower mold part 2 absorbs a difference between the amounts of thermal expansion in the direction of the first center line X and in the direction of the second center line Y which the base mold 21 and the design mold 25 experience by being heated by the heat sources 4, 4, and thereby maintains the two molds 21, 25 in position.

Likewise, the positioning mechanism provided for the suspended base mold 33 and the design mold 35 of the upper mold part 3 absorbs a difference between the amounts of thermal expansion in the direction of the first center line X and in the direction of the second center line Y which the suspended base mold 33 and the design mold 35 experience by being heated by the heat sources 4, 4, and thereby maintains the two molds 33, 35 in position.

When the resin is a thermosetting resin, the thermosetting resin is cured by causing the heat sources 4 to continue the heating operation, and then, supply of electricity to the heat sources 4 is stopped. Consequently, a product (fiber reinforced composite member) molded from the layered prepreg P is obtained.

When the resin is a thermoplastic resin, after the application of pressure, supply of electricity to the heat sources 4 is stopped to cool and thereby cure the thermoplastic resin through the upper mold part 3 and the lower mold part 2. Consequently, a product (fiber reinforced composite member) molded from the layered prepreg P is obtained.

In this molding apparatus 1, the design molds 25, 35 of the mold parts 2, 3 are made of a metal lower in thermal expansion rate than the base mold 21 and the suspended base mold 33. During heating for molding, this can suppress the influence of thermal expansion of the design molds 25, 35 of the mold parts 2, 3 upon a product to be molded from the layered prepreg P.

In the described embodiment, the positioning mechanism for the lower mold part comprises two second-direction movement restriction pins 21a, 21a and a first-direction movement restriction pin 21b provided to the base mold 21 of the lower mold part 2, and two second-direction movement restriction grooves 25a, 25a and a first-direction movement restriction groove 25b formed in the design mold 25 of the lower mold part 5. The positioning mechanism is however not restricted to this; it may be altered to comprise two second-direction movement restriction pins and a first-direction movement restriction pin provided to the design mold 25 of the lower mold part 2, and two second-direction movement restriction grooves and a first-direction movement restriction groove formed in the base mold 21 of the lower mold part 2.

Likewise, the positioning mechanism for the upper mold part may be altered to comprise two second-direction movement restriction pins and a first-direction movement restriction pin provided to the design mold 35 of the upper mold part 3, and two second-direction movement restriction grooves and a first-direction movement restriction groove formed in the suspended base mold 33 of the upper mold part 3.

Further, the embodiment has been described based on an example in which the woven carbon-fiber fabric constituting the prepreg is woven carbon-fiber fabric, or fabric woven from carbon fibers. The present invention is however not restricted to this.

The fiber reinforced composite member molding apparatus according to the present disclosure is not restricted to the described embodiment.

A first aspect of the present invention comprises a pair of mold parts which are brought nearer to and away from each other, and in a mold clamping state, clamps laminated sheets of prepreg formed of woven fiber fabric impregnated with resin (thermosetting or thermoplastic resin), and a heating system for heating the resin in the prepreg through the pair of mold parts, wherein the two mold parts each comprise a base mold and a design mold which is detachably attached to the base mold and brought into contact with the prepreg, wherein the design molds of the mold parts are made of a metal lower in thermal expansion rate than the base molds.

In the fiber reinforced composite member molding apparatus according to the first aspect of the present invention, the two mold parts each have a split structure, and thus, when replacement of the mold parts is required, the replacement can be accomplished by replacing only the design molds. This reduces the burden on operators handling the replacement.

In addition, in the fiber reinforced composite member molding apparatus according to the first aspect of the present invention, the design molds of the mold parts are made of a metal lower in thermal expansion rate than the base molds. During heating for molding, this can suppress the influence of thermal expansion of the design molds of the mold parts upon a to-be-molded fiber reinforced composite member.

In a second aspect of the present invention, for the base mold and the design mold of each of the two mold parts, a positioning mechanism is provided to place the base mold and the design mold in position with respect to each other, the positioning mechanism being adapted to absorb a difference between the amounts of thermal expansion which the base mold and the design mold experience by being heated by the heating system.

Consequently, the positioning mechanism can maintain the base mold and the design mold in position with respect to each other.

In a third aspect of the present disclosure, the positioning mechanism comprises two second-direction movement restriction pins provided on the first of two center lines crossing at right angles at a center of one of the two molds: the base mold and the design mold, the two second-direction movement restriction pins being arranged on opposite sides of the center; a first-direction movement restriction pin provided on the second of the two center lines; two second-direction movement restriction grooves provided on and extending along the first of two center lines crossing at right angles at a center of the other of the two molds, the two second-direction movement restriction grooves being arranged on opposite sides of the center and adapted to engage with the two second-direction movement restriction pins; and a first-direction movement restriction groove provided on and extending along the second of the two center lines and adapted to engage with the first-direction movement restriction pin.

In the fiber reinforced composite member molding apparatus according to the third aspect of the present invention, the base mold and the design mold are placed in position with respect to each other, with their centers in agreement.

In the fiber reinforced composite member molding apparatus according to each aspect of the present invention, the base mold of each mold part is made of, for example tool steel, while the design mold is made of an alloy with a low thermal expansion rate, such as inver (registered trademark).

In the fiber reinforced composite member molding apparatus according to each aspect of the present invention, the woven fiber fabric constituting the prepreg may be woven carbon-fiber fabric, or fabric woven from carbon fibers. The present invention is however not restricted to this.

Here, resins usable as a matrix with which to impregnate the woven fiber fabric include thermosetting resins such as epoxy resin, phenol resin and polyimide resin, and thermoplastic resins such as PEEK (polyether ether ketone resin), PEI (polyetherimide resin) and PIXA (thermoplastic polyimide resin).

### Explanation of Reference Signs

1 Fiber reinforced composite member molding apparatus
2 Lower mold part (pair of mold parts)
3 Upper mold (pair of mold parts)
4 Heat source (heating system)
21, 31 Base mold
21a, 33a Second-direction movement restriction pin (positioning mechanism)
21b, 33b First-direction movement restriction pin (positioning mechanism)
25, 35 Design mold
25a, 35a Second-direction movement restriction groove (positioning mechanism)
25b, 35b First-direction movement restriction groove (positioning mechanism)
33 Suspended base mold
C Center of mold
P Layered prepreg (material to be molded into a fiber reinforced composite member)
X Center line
Y Center line

## Claims

1. A fiber reinforced composite member molding apparatus, comprising
a pair of mold parts which are brought nearer to and away from each other, and in a mold clamping state, clamps laminated sheets of prepreg formed of woven fiber fabric impregnated with resin, and
a heating system for heating the resin in the prepreg through the pair of mold parts, wherein
the two mold parts each comprise a base mold and a design mold which is detachably attached to the base mold and brought into contact with the prepreg, wherein
the design molds of the mold parts are made of a metal lower in thermal expansion rate than the base molds.

2. The fiber-reinforced composite member molding apparatus according to claim 1, wherein for the base mold and the design mold of each of the two mold parts, a positioning mechanism is provided to place the base mold and the design mold in position with respect to each other, the positioning mechanism being adapted to absorb a difference between the amounts of thermal expansion which the base mold and the design mold experience by being heated by the heating system.

3. The fiber-reinforced composite member molding apparatus according to claim 2, the positioning mechanism comprises two second-direction movement restriction pins provided on the first of two center lines crossing at right angles at a center of one of the two molds: the base mold and the design mold, the two second-direction movement restriction pins being arranged on opposite sides of the center; a first-direction movement restriction pin provided on the second of the two center lines; two second-direction movement restriction grooves provided on and extending along the first of two center lines crossing at right angles at a center of the other of the two molds, the two second-direction movement restriction grooves being arranged on opposite sides of the center and adapted to engage with the two second-direction movement restriction pins; and a first-direction movement restriction groove provided on and extending along the second of the two center lines and adapted to engage with the first-direction movement restriction pin.
